# EUROPÄISCHE PATENTSCHRIFT

(11) **EP 2 026 998 B1**
(45) Veröffentlichungstag und Bekanntmachung des Hinweises auf die Patenterteilung: **12.05.2010**
(21) Anmeldenummer: 07725669.1
(22) Anmeldetag: 30.05.2007
(51) Int. Cl.: B60S 1/04

(54) **WISCHANLAGE FÜR FAHRZEUGSCHEIBEN**
WIPER SYSTEM FOR VEHICLE WINDOWS
SYSTEME D'ESSUIE-GLACE POUR PARE-BRISES DE VEHICULES

(30) Priorität: 13.06.2006 DE 102006027345
(43) Veröffentlichungstag der Anmeldung: 25.02.2009
(73) Patentinhaber: VALEO SYSTEMES D'ESSUYAGE, 78321 La Verrière (FR)
(72) Erfinder: SCHOLL, Wolfgang, 74376 Gemmrigheim (DE); LANGE, Klaus, 74189 Weinsberg (DE); WAIBLE, Siegfried, 74223 Flein (DE)
(74) Vertreter: Jahn, Wolf-Diethart
(86) Internationale Anmeldenummer: PCT/EP2007/004779
(87) Internationale Veröffentlichungsnummer: WO 2007/144069

(56) Entgegenhaltungen:
- EP-A- 1 103 434
- WO-A-2005/044647
- WO-A-2005/075265
- WO-A-2007/012551
- WO-A-2007/028678
- DE-A1- 19 851 881
- US-A1- 2004 123 413
- US-B1- 6 845 540

## Beschreibung

Die Erfindung bezieht sich auf eine Wischanlage für Fahrzeugscheiben, insbesondere für Fahrzeugfrontscheiben gemäß Oberbegriff Patentanspruch 1.

Die bei Straßenfahrzeugen in der Regel über die Außenkontur der Fahrzeugkarosserie vorstehenden Wischwellen und die an diesen vorgesehenen Elemente einer Wischanlage, wie Wischarme oder Lagerteile solcher Wischarme usw., stellen bei Unfällen, insbesondere auch bei solchen mit Fußgängern und/oder Zweiradfahrer eine erhebliche Gefahrenquelle für Verletzungen dar.

Um das Verletzungsrisiko zu minimieren ist bekannt, Wischanlagen für Fahrzeuge grundsätzlich so auszubilden, dass bei einer einen bestimmten Schwellwert oder eine bestimmte Auslösekraft übersteigenden Krafteinwirkung, insbesondere auch in einer Achsrichtung parallel oder annähernd parallel zu der Wischwellenachse, die Wischwelle axial in den Innenraum der Fahrzeugkarosserie ausweicht. Diese Ausweichbewegung kann z.B. dadurch realisiert sein, dass eine das Lager für die Wischwelle (Wischwellenlager) aufweisende Motor- oder Wischerplatine mit Befestigungseinrichtungen an der Fahrzeugkarosserie gehalten ist, die bei einer die Auslösekraft übersteigenden Krafteinwirkung die Verbindung zwischen der Wischerplatine und der Fahrzeugkarosserie lösen (DE 198 33 488 A1).

Bekannt sind auch Ausführungen, bei denen die Wischwelle für ein axiales Verschieben in ihrem Wischwellenlager ausgebildet ist, im Normalzustand bzw. für den normalen Wischbetrieb aber durch ein Axial-Sicherungselement gegen axiales Verschieben gesichert ist. Dieses Axial-Sicherungselement ist beispielsweise ein in einer Ringnut der Wischwelle aufgenommener Federring, der sich im Normalzustand der Wischanlage gegen eine Fläche des Wischwellenlagers abstützt und dadurch die Wischwelle gegen axiales Verschieben sichert (DE 198 51 881 A1). Die Ringnut ist an ihrer dem Wischwellenlager entfernten Seite leicht angeschrägt, sodass bei einer eine Auslösekraft übersteigenden Krafteinwirkung auf die Wischwelle bzw. auf das mit dieser verbundene Ende des Wischarmes der Federring durch die angeschrägte Seite der Ringnut so aufgeweitet wird, dass die Wischwelle axial durch den weiterhin gegen das Wischwellenlager anliegenden Federring hindurch gleiten und so innerhalb des Wischwellenlagers axial ausweichen kann.

Bei den vorgenannten bekannten Lösungen ist der Kurbelarm, der das mit der Wischwelle zusammenwirkende Antriebselement gebildet, jeweils mit demjenigen Ende der Wischwelle verbunden, welches dem Fahrzeuginnenraum zugewandt ist, d.h. dem mit dem Wischarm zu verbindenden Wischwellenende gegenüberliegt. Nachteilig ist bei den bekannten Lösungen auch, dass die Auslösung des Personenschutzes, d.h. die Freigabe der Wischwelle für ein axiales Ausweichen erst bei einer relativ hohen äußeren Krafteinwirkung erfolgt, d.h. die Auslösekraft relativ groß ist. Dies ergibt sich daraus, dass die im normalen Wischbetrieb auftretenden Kräfte nicht zu einer Auslösung des Personenschutzes bzw. der Schutzfunktion führen dürfen und hierfür Wischanlagen u.a. sämtliche Tests, wie z. B. Dauerlaufen, Blockiertest, Schneelasttest usw. bestehen müssen, ohne dass die Schutzfunktion ausgelöst wird.

Bekannt ist weiterhin eine Wischanlage für Fahrzeuge (WO 2004/050440), bei der als Axial-Sicherungselement für die Wischwelle eine Druckfeder vorgesehen ist, die eine aus einem Wischwellenlagergehäuse vorstehende und für die Befestigung eines Wischarmes dienende Teillänge der Wischwelle umschließt und sich einerseits an einem Wischwellenlagergehäuse und andererseits an einem an dieser Teillänge befestigten Kurbelarm abstützt. Im Falle eines Unfalls, d.h. beim Einwirken einer axialen Kraft auf die Wischwelle kann diese durch Spannen der Druckfeder axial ausweichen. Eine tatsächliche Freigabe der Wischwelle für eine axiale Ausweichbewegung bei einer eine Auslösekraft überschreitenden Krafteinwirkung auf die Wischwelle erfolgt bei dieser bekannten Wischanlage aber nicht. Außerdem sind der Hub bzw. die Größe der axialen Ausweichbewegung durch die verwendete Druckfeder stark eingeschränkt.

Aufgabe der Erfindung ist es, eine Wischanlage aufzuzeigen, die die vorgenannten Nachteile vermeidet und einen verbesserten Personenschutz gewährleistet. Zur Lösung dieser Aufgabe ist eine Wischanlage entsprechend dem Patentanspruch 1 ausgebildet.

Bei der Erfindung ist das Axial-Sicherungselement so ausgebildet, dass es bei einer eine Auslösekraft übersteigenden äußeren Krafteinwirkung auf die Wischwelle diese für ein axiales Ausweichen, d.h. für eine axiale Ausweichbewegung frei gibt. Unter Freigabe der Wischwelle für die axiale Ausweichbewegung ist dabei im Sinne der Erfindung insbesondere zu verstehen, dass nach dem Überschreiten der Auslösekraft und damit nach dem Außerwirksambringen des Axial-Sicherungselementes die Wischwelle weitestgehend kraftlos axial bewegt wird.

Nach einem Aspekt der Erfindung greift das mit der jeweiligen Wischwelle beim Wischbetrieb zusammenwirkende, d.h. die Wischwelle schwenkende Antriebselement, welches vorzugsweise von einem Kurbelarm gebildet ist, an derjenigen Teillänge der Wischwelle an, die aus dem Wischwellenlager vorsteht und das für die Befestigung des Wischarmes dienende Ende aufweist. Der Angriffsbereich zwischen dem Antriebselement und der Wischwelle ist dabei vorzugsweise dem Wischwellenlager unmittelbar benachbart. Die antriebsmäßige Verbindung zwischen dem Antriebselement und der Wischwelle ist so ausgebildet, dass sie zumindest während des Normalbetriebes bzw. im Normalzustand besteht, die Wischwelle für die Schutzfunktion, d.h. bei der axialen Ausweichbewegung auch relativ zum Antriebselement bewegbar ist. Das Axial-Sicherungselement ist dabei beispielsweise ein gesondertes Element, welches z.B. im Normalzustand auch das Antriebselement auf der Wischwelle axial sichert. Bei einer bevorzugten Ausführungsform ist das Axial-Sicherungselement aber von dem Antriebselement oder einem die Wischwelle übergreifenden Abschnitt dieses Antriebselementes gebildet, von einem einstückig mit dem Antriebselement hergestellten hülsenartigen Abschnitt oder von einem hülsenartigen Verbindungselement, welches am Antriebselement befestigt ist.

Nach einem weiteren Aspekt der Erfindung ist das z.B. hülsenartig ausgebildete Axial-Sicherungselement auf der Wischwelle diese umschließend verdrehungssicher gehalten, insbesondere um während des normalen Wischbetriebes ein Verdrehen des Axial-Sicherungselementes relativ zur Wischwelle und damit auch einen möglicherweise die Auslösekraft verändernden Abrieb am Axial-Sicherungselement zu vermeiden.

Eine Weiterbildung der Erfindung sieht vor, dass die Wischwelle einen Wischwellenabschnitt aufweist, der einen von der Kreisform abweichenden Querschnitt besitzt und/oder mit einer Profilierung, beispielsweise mit einer Rändelung, versehen ist und der von dem Antriebselement oder von dem Verbindungselement formschlüssig umgriffen wird.

Eine andere Weiterbildung der Erfindung sieht vor, dass der Wischwellenabschnitt einen Querschnitt aufweist, der sich in Richtung zum ersten Wischwellenende hin verjüngt.

Eine andere Weiterbildung der Erfindung sieht vor, dass der sich in Richtung zum ersten Wischwellenende hin verjüngende Wischwellenabschnitt kegelstumpfförmig ausgebildet ist.

Eine andere Weiterbildung der Erfindung sieht vor, dass das Wischwellenlager ein an einer Platine der Wischanlage ausgebildetes Lager ist.

Noch andere Weiterbildungen der Erfindung sind Gegenstand der Unteransprüche. Die Erfindung wird im Folgenden anhand der Figuren an Ausführungsbeispielen näher erläutert. Es zeigen:
- Fig. 1: in vereinfachter Darstellung die an einer Fahrzeugkarosserie zu befestigende Motor- oder Wischerplatine (Rohrplatine) einer Scheibenwischanlage;
- Fig. 2: in Einzeldarstellung und im Schnitt eines der beiden Wischwellenlager der Platine der Figur 1, zusammen mit der Wischwelle und dem an der Wischwelle vorgesehenen Antriebselement bzw. Kurbelarm des Scheibenwischerantriebes;
- Fig. 3: eine Darstellung wie Figur 1, jedoch bei in die Ausweichposition axial verschobener Wischwelle;

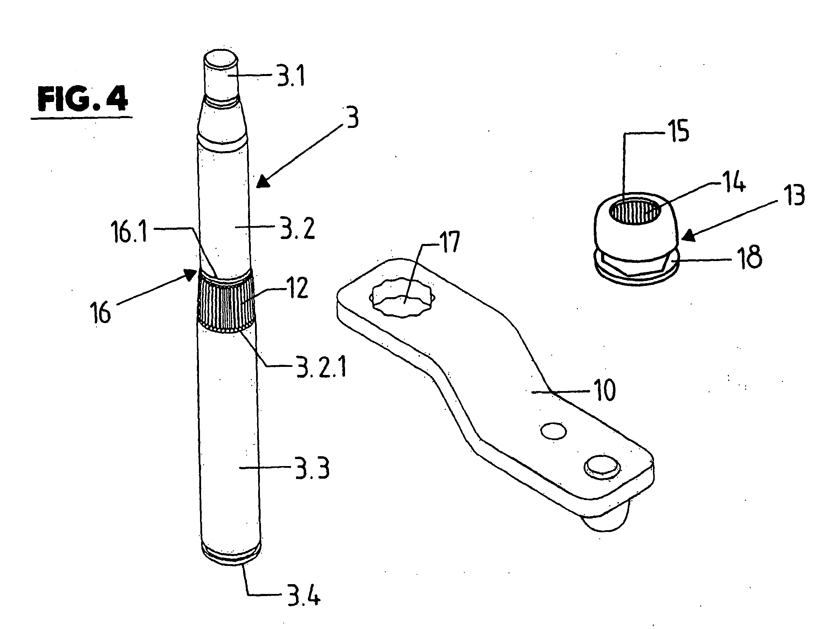

- Fig. 4: in perspektivischer Einzeldarstellung die Wischwelle, den Kurbelarm sowie ein Anschluss- oder Verbindungselement zum Verbinden des Kurbelarmes mit der Wischwelle;
- Fig. 5 u. 6: Darstellungen ähnlich den Figuren 2 und 3 bei einer nicht beanspruchten weiteren Ausführungsform;
- Fig. 7: in vereinfachter schematischer Darstellung eine die Wischwelle bildende Ausgangswelle eines Wischermotors.

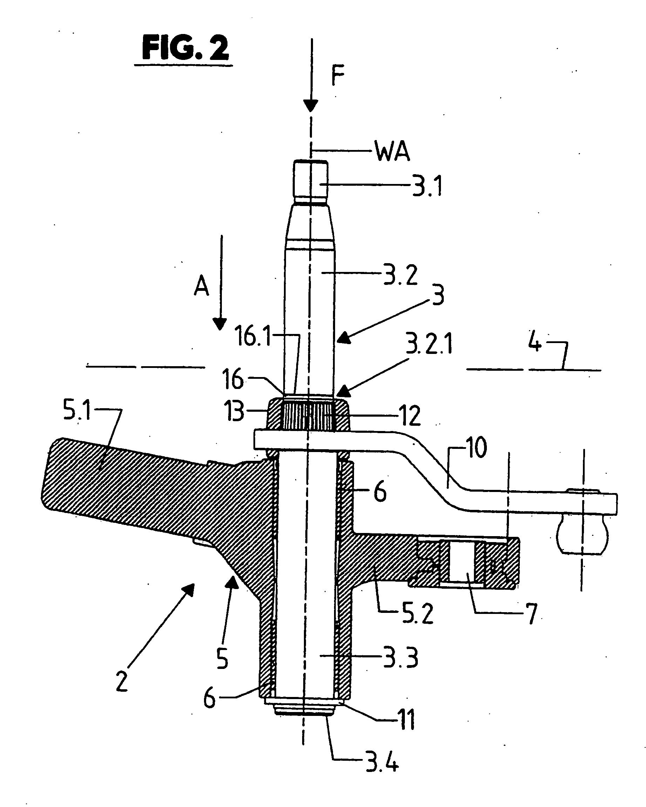

In den Figuren ist 1 die als Rohrplatine ausgeführte Motor- oder Wischerplatine einer Scheibenwischanlage für Fahrzeuge, insbesondere Straßenfahrzeuge. Die Platine 1 besteht im Wesentlichen aus einem rohrartigen Träger 1.1, der beidendig jeweils mit einem Wischwellenlager 2 versehen ist, und zwar zur dreh- bzw. schwenkbaren Lagerung einer Wischwelle 3, die nach der Montage der Scheibenwischanlage bzw. der Platine 1 in einem Fahrzeug mit ihrem verjüngten Wischwellenende 3.1 über die in der Figur 2 mit der unterbrochenen Linie 4 angedeutete Außenkontur des Fahrzeugs bzw. der Fahrzeugkarosserie vorsteht, und zwar zur Befestigung eines nicht dargestellten Wischarmes an dem Ende 3.1.

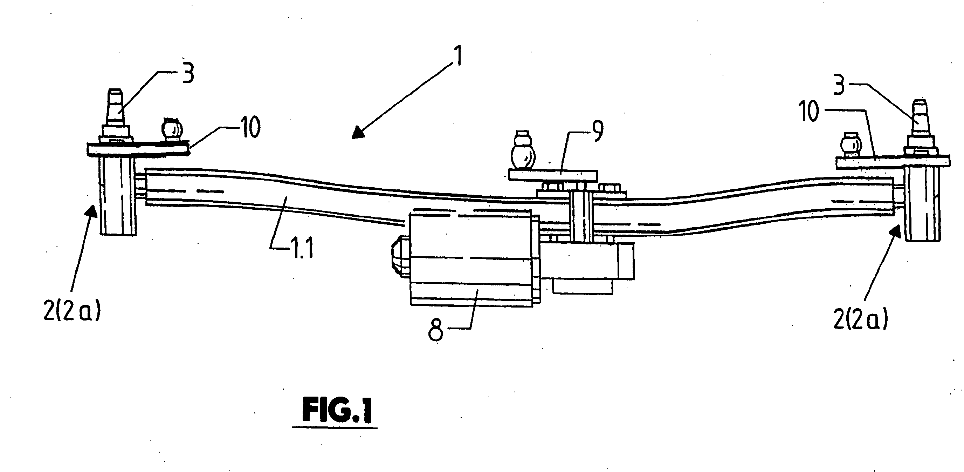

Das Wischwellenlager 2 besteht im Wesentlichen aus einem beispielsweise aus einem metallischen Werkstoff geformten Wischwellenlagergehäuse 5 mit einer Lagerbuchse 6 aufweisenden Lageröffnung zur Lagerung der Wischwelle 3. Das Wischwellenlagergehäuse 5 ist einstückig mit einem zapfenartigen Abschnitt 5.1 hergestellt, mit dem es an einem Ende des Trägers 1.1 der Platine 1 befestigt ist. Weiterhin ist das Wischwellenlagergehäuse 5 mit einem Abschnitt 5.2 hergestellt, an welchem eine vorzugsweise gedämpft bzw. elastisch gelagerte Befestigungsöse 7 zur Befestigung der Platine 1 an der Fahrzeugkarosserie vorgesehen ist. Über ein Kurbelgetriebe, von dem in der Figur 1 nur der an der Ausgangswelle des elektromotorische Antriebs 8 vorgesehene Kurbelarm 9 sowie die jeweils an den Wischwellen 3 vorgesehenen Kurbelarme 10 dargestellt sind, sind Wischwellen 3 in der dem Fachmann bekannten Weise für ihre Schwenkbewegung antriebsmäßig mit dem am Träger 1.1 befestigten Antrieb 8 verbunden.

In dem in der Figur 2 dargestellten Normalzustand, den Wischanlage nach der Montage aufweist, steht die Wischwelle 3 mit einer das Wischwellenende 3.1 bildenden Teillänge 3.2 aus dem Wischwellenlager 2 bzw. dem Wischwellenlagergehäuse 5 vor. Mit der Teillänge 3.3 ist die Wischwelle 3 in dem Wischwellenlagergehäuse 5 gelagert. An dem dem Wischwellenende 3.1 entfernt liegenden anderen Wischwellenende 3.4 stützt sich die Wischwelle 1 über eine Auflaufscheibe 11 axial am Wischwellenlagergehäuse 5 ab.

Der Kurbelarm 10 ist in dem in der Figur 2 dargestellten Normalzustand mit seinem einen Ende an der Teillänge 3.2 drehfest bzw. in einer die Übertragung eines Antriebsmomentes ermöglichenden Weise mit der Wischwelle 3 verbunden, und zwar an einem Abschnitt 3.2.1 dieser Teillänge 3.2, welcher im Normalzustand unmittelbar an das Wischwellenlagergehäuse 5 anschließt. Der Abschnitt 3.2.1 ist leicht kegelstumpfförmig derart ausgebildet, dass sein Durchmesser in Richtung zum freien Wischwellenende 3.1 hin abnimmt. Der Abschnitt 3.2.1 ist weiterhin mit einer Rändelung 12 versehen, die von einer Vielzahl von sich entlang der Mantellinie des Abschnitts 3.2.1 bzw. in Richtung der Wischwellenachse WA erstreckenden Vorsprüngen und dazwischen liegenden nutenartigen Vertiefungen gebildet ist.

Zur Befestigung des Wischarmes 10 am Abschnitt 3.2.1 dient ein Verbindungselement 13, welches hülsenartig ausgebildet ist, und zwar bei der dargestellten Ausführungsform als Formteil aus Kunststoff, und welches mit seiner Hülsenöffnung 14 den Wischwellenabschnitt 3.2.1 formschlüssig umschließt, d.h. die Hülsenöffnung 14 ist ebenfalls der Form des Abschnittes 3.2.1 entsprechend kegelstumpfförmig und mit einer der Rändelung 12 entsprechenden Profilierung ausgeführt. An der einen Stirnseite des hülsenartigen Verbindungselementes 13, d.h. dort, wo die Hülsenöffnung 14 den kleineren Durchmesser aufweist, ist ein in die Hülsenöffnung 14 hineinreichender ringartiger Wulst 15 angeformt, der bei an der Wischwelle 3 montiertem Verbindungselement 13 bzw. Kurbelarm 14 in eine in die Wischwelle 3 eingebrachte und die Wischwellenachse WA konzentrisch umschließende Ringnut 16 eingreift. Die dem Wischwellenende 3.1 zugewandte Seite 16.1 der Ringnut 16 bildet eine wischwellenseitige, axiale Abstütz- oder Anlagefläche für das von dem Verbindungselement 13.

Dieses ist als Axial-Sicherungselement ausgebildet, welches in der nachstehend noch näher beschriebenen Weise ein axiales Ausweichen der Wischwelle 3 in Richtung des Pfeils A der Figur 2, d.h. im Sinne eines axialen Verschiebens des Wischwellenendes 3.1 in Richtung des Wischwellenlagergehäuses 5 ermöglicht, wenn beispielsweise im Falle eines Unfalls eine auf die Wischwelle 3 axial einwirkende Kraft F eine Auslösekraft übersteigt, bei der das Auslösen dieser Schutzfunktion erfolgt. Durch die kegelstumpfförmige Ausbildung des Abschnittes 3.2.1 erfolgt das weitere axiale Ausweichen der Wischwelle 3 nach dem Auslösen der Schutzfunktion nahezu kraftlos. Durch die leicht kegelstumpfförmige Ausbildung des Wischwellenabschnittes 3.2.1 ist auch gewährleistet, dass die für das Auslösen der Schutzfunktion notwendige Auslösekraft im Wesentlichen nur durch das Ineinandergreifen des Wulstes 15 und der Ringnut 16 bestimmt ist, sodass sich für die Auslösekraft eindeutige und reproduzierbare Verhältnisse ergeben.

Im Normalzustand der Wischanlage stützt sich das hülsenartige Verbindungselement 13 mit einer Stirnseite, an der die Hülsenöffnung 14 ihren größeren Durchmesser aufweist, für die axiale Sicherung der Wischwelle 3 in Richtung des Pfeils A der Figur 2 am Wischwellenlagergehäuse 5 ab.

Der aus Metall hergestellte Kurbelarm 10 weist an seinem mit dem Verbindungselement 13 versehenen Ende eine Öffnung 17 auf, die für eine drehfeste und die Übertragung eines Antriebsmomentes ermöglichende Verbindung zwischen dem Kurbelarm und dem Verbindungselement 13 einen von der Kreisform abweichenden Querschnitt besitzt. Bei der dargestellten Ausführungsform ist die Öffnung 17 an ihrer Innenfläche wellenförmig ausgeführt. Auch andere Ausführungen sind denkbar, beispielsweise ein polygonartiger Querschnitt für die Öffnung 17, mit der der Kurbelarm 10 das hülsenartige Verbindungselement 13 im Bereich einer an der Außenfläche dieses Verbindungselementes gebildeten ringförmigen Nut 18 formschlüssig umschließt, sodass die Achse des hülsenartigen Verbindungselementes 13 achsgleich mit der Achse der Öffnung 17 liegt. Bevorzugt ist das Verbindungselement 13 durch Anspritzen an den Kurbelarm 10 hergestellt.

Im Normalzustand ist somit jede Wischwelle 3 über das Verbindungselement 13 und den zugehörigen Kurbelarm 10 antriebsmäßig mit dem Antrieb 8 verbunden, wobei durch die Auflaufscheibe 11 einerseits und durch das sich gegen das Wischwellenlagergehäuse 5 abstützende Verbindungselement 13 andererseits die Wischwelle 3 gegen axiales Verschieben im Wischwellenlager 2 gesichert ist.

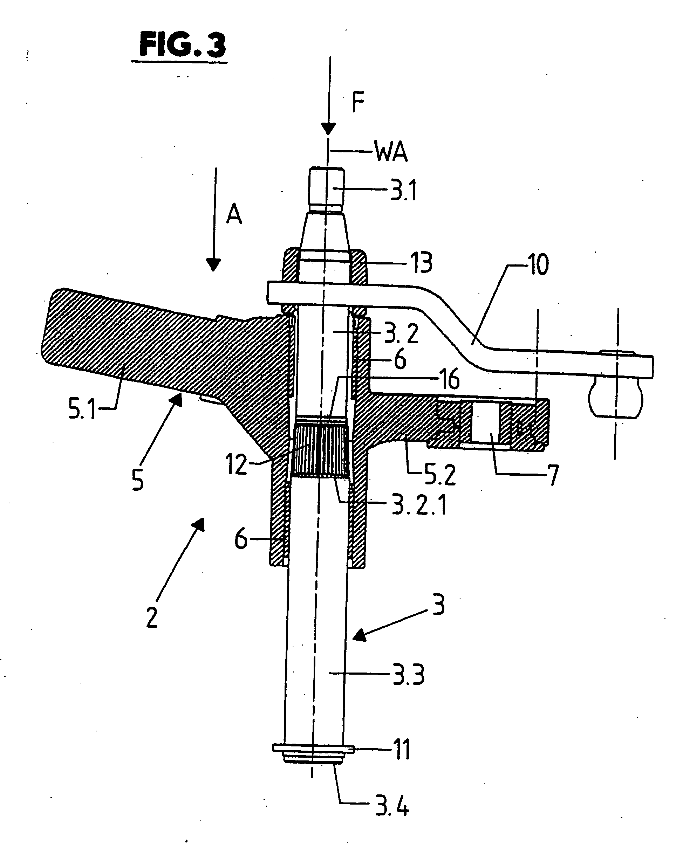

Wirkt auf die Wischwelle 3 beispielsweise in Folge eines Unfalls eine Kraft F ein, die die Auslösekraft übersteigt, so erfolgt unter Lösen der rastenden Verbindung zwischen dem Wulst 15 und der Nut 16 ein axiales Verschieben der Wischwelle 3 in Richtung des Pfeils A, sodass diese zur Vermeidung von Verletzungen usw. bei weiterhin am Wischwellenlagergehäuse 5 anliegendem Verbindungselement 13 mit ihrem freien Ende 3.1 in Richtung des Wischwellenlagergehäuses 5 und damit in Richtung Fahrzeuginnenseite ausweichen kann. Dieser nach dem Auslösen der Schutzfunktion erreichte Zustand ist in der Figur 3 wieder gegeben. Die Schutzfunktion ist möglich, obwohl der Kurbelarm 10 an der Teillänge 3.2 der Wischwelle 3 angreift, die (Teillänge) das zur Befestigung des Wischarmes dienende Ende 3.1 aufweist.

Die Auslösekraft, bei der die Schutzfunktion ausgelöst wird, kann bei dieser Ausführungsform u.a. durch die Form und Tiefe der Ringnut 16, durch die Form und Größe des Wulstes 15, durch die Eingriffstiefe des Wulstes 15 in die Ringnut 16, durch den Konuswinkel des Wischwellenabschnittes 3.2.1 sowie durch die Materialpaarung des für die Wischwelle 3 und das Verbindungselement 13 eingestellt werden.

Die Vorteile der beschriebenen Ausführung bestehen u.a. darin,
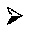 dass trotz der beschriebenen Schutzfunktion der Kurbelarm 10 an der den Wischarm tragenden Teillänge 3.2 der Wischwelle 3 angreifen kann,
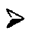 dass im Falle eines Unfalls das axiale Ausweichen der Wischwelle 3 ohne eine Verformung und/oder Lageänderung der Elementen des Scheibenwischerantriebs bzw. des Kurbelantriebs möglich ist,
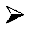 dass das Ausweichen der Wischwelle 3 mit großem Bewegungshub möglich ist, und
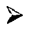 dass außerdem das Verbindungselement 13 zugleich als die Freigabe der Wischwelle 3 bewirkendes Axial-Sicherungselement dient und dadurch für die Schutzfunktion praktisch kein zusätzliche Bauteil benötigt wird.

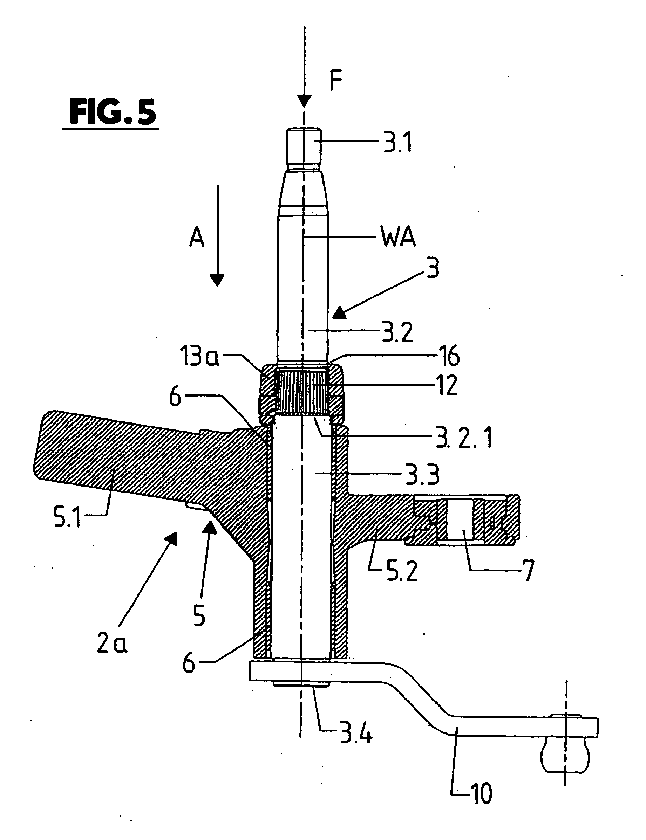

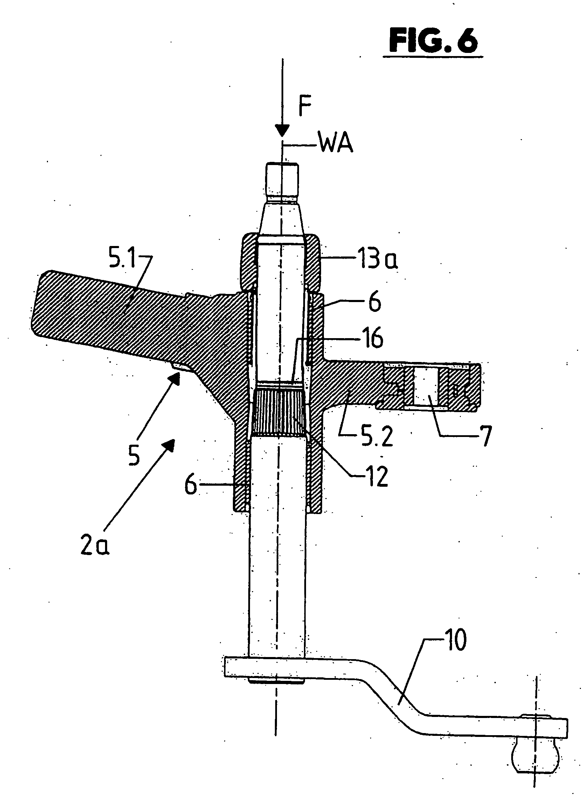

Die Figuren 5 und 6 zeigen als weitere nicht beanspruchte Ausführung ein Wischwellenlager 2a wiederum bestehend aus dem Wischwellenlagergehäuse 5 und aus der in diesem Wischwellenlagergehäuse gelagerten Wischwelle 3, wobei bei dieser Ausführung der Kurbelarm 10 nicht an der Teillänge 3.2 angreift, sondern mit dem Wischwellenende 3.4 drehfest verbunden. Als Axial-Sicherungselement 13a für die Wischwelle 3 dient ein Element, welches identisch mit dem Verbindungselement 13 ausgeführt ist, lediglich mit dem Unterschied, dass an dem Axial-Sicherungselement 13a kein Kurbelarm befestigt ist und das Axial-Sicherungselement 13a daher auch nicht die Ring- oder Umfangsnut 18 aufweist. Das Axial-Sicherungselement 13a umschließt in der Normallage der Wischwelle 3 diese wiederum im Bereich des leicht kegelstumpfförmigen und mit der Rändelung 12 versehenen Abschnittes 3.2.1 formschlüssig. Weiterhin greift das Axial-Sicherungselement 13a mit einem an seiner Hülsenöffnung ausgebildeten Wulst in die Ringnut 16 ein, wie dies vorstehend für das Verbindungselement 13 beschrieben wurde.

Das Axial-Sicherungselement 13a gibt die Wischwelle 3 für ein axiales Ausweichen frei, wenn auf diese Wischwelle eine axiale Kraft F einwirkt, die die Auslösekraft übersteigt. Nach dem axialen Ausweichen der Wischwelle 3 weist diese dann die in der Figur 6 dargestellte Lage relativ zu dem Wischwellenlagergehäuse 5 auf.

Auch bei dieser Ausführung wird durch die leicht konische Ausbildung des Abschnittes 3.2.1 wiederum gewährleistet, dass die Auslösekraft im Wesentlichen durch die Ausbildung des Wulstes 15 und der Nut 16 sowie durch die Materialwahl insbesondere für den Wulst 15 bestimmt ist und nicht oder nur vernachlässigbar durch Reibungskräfte zwischen dem Axial-Sicherungselement 13a und der Wischwelle 3 außerhalb des Wulstes 15. Durch die kegelstumpfförmige Ausbildung des Abschnittes 3.2.1 erfolgt das weitere axiale Ausweichen der Wischwelle 3 nach dem Auslösen der Schutzfunktion nahezu kraftlos.

Durch den verdrehungssicheren Halt des Axial-Sicherungselementes 13a auf der Wischwelle 3, der über die Rändelung 12 des Abschnittes 3.2.1 und die entsprechende Rändelung an der Innenfläche der Hülsenöffnung des Axial-Sicherungselementes 13a erzielt ist, ist eine relative Drehbewegung zwischen dem Axial-Sicherungselement 13a und der Wischwelle 3 während des Wischbetriebes verhindert und damit auch vermieden, dass es zu einer Abnutzung an den die Auslösekraft im Wesentlichen bestimmenden Bereichen, nämlich vor allem an dem in die Ringnut 16 eingreifenden Wulst des Axial-Sicherungselementes 13a, und damit zu einer Veränderung der Auslösekraft kommen kann.

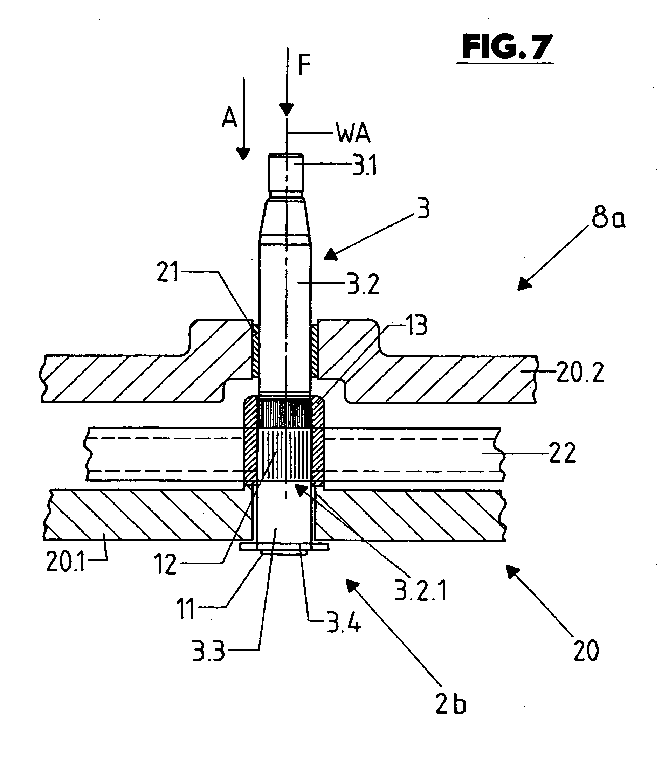

Bei den vorstehend beschriebenen Ausführungsformen wird die Wischerwelle 3 jeweils mittelbar über einen Kurbelantrieb von dem elektromotorischen Wischerantrieb 8 angetrieben. Es sind aber auch Ausführungen möglich, bei denen die Wischwelle 3 Teil eines direkt antreibenden Wischermotors, d.h. die Ausgangswelle eines solchen Motors, z.B. die Ausgangswelle eines als Getriebemotor ausgebildeten elektromotorischen Antriebs ist, wie dies in der Figur 7 dargestellt ist. Der elektromotorische Antrieb ist dort allgemein mit 8a bezeichnet. Die Wischwelle 3 ist an ihren bei dieser Ausführungsform verkürzten Abschnitt 3.3 bzw. im Bereich ihres Endes 3.4 zur Bildung des Wischwellenlagers 2b in einem Gehäuseteil 20.1 des als Getriebemotor ausgebildeten elektromotorischen Antriebs 8a bzw. des Gehäuses 20 dieses Antriebs gelagert. Im Bereich ihres anderen Endes ist die Wischwelle 3 in einem zusätzlichen Lager 21 abgestützt, welches in einem Gehäuseteil, beispielsweise Gehäusedeckel 20.2 des Getriebegehäuses 20 gebildet ist. Im Inneren des Getriebegehäuses 20 bzw. auf dem dort mit der Rändelung 12 versehenen Wischwellenabschnitt 3.2.1 ist über das Verbindungselement 13 ein Getrieberad 22 (Schneckenrad) antriebsmäßig mit der Wischwelle 3 verbunden. Das Getrieberad 22 wirkt beispielsweise in der, dem Fachmann bekannten Weise, mit einer, auf der Ausgangswelle eines Elektromotors des Antriebs 8a, gebildeten Schnecke zusammen.

Es versteht sich, dass das Getrieberad 22 wiederum drehfest mit dem Verbindungselement 13 verbunden ist. Letzteres ist beispielsweise wiederum durch Anspritzen an dem Getrieberad 22 befestigt.

Die Funktion des Verbindungselementes 13 entspricht der Funktion, wie sie im Zusammenhang mit den Figuren 2 und 3 für dieses Verbindungselement beschrieben wurde, d.h. bei Einwirkung einer axialen Kraft F auf das Wischwellenende 3.1, die die Auslöskraft übersteigt, erfolgt das Auslösen der Schutzfunktion, d.h. die Wischwelle 3 wird mit ihrem über das Gehäuseteil 20.1 vorstehenden Teillänge axial in das Gehäuse 20 bewegt, und zwar durch axiales Ausweichen in Richtung des Pfeils A.

Die Erfindung wurde voranstehend an Ausführungsbeispielen beschrieben. Es versteht sich, dass zahlreiche Änderungen sowie Abwandlungen möglich sind, ohne das dadurch der der Erfindung zugrunde liegende Erfindungsgedanke verlassen wird. So wurde vorstehend davon ausgegangen, dass die Auslösekraft im Wesentlichen durch einen, am Verbindungselement 13 bzw. am Axial-Sicherungselement 13a gebildeten und in die Ringnut 16 eingreifenden Wulst bestimmt ist. Anstelle dieses Wulstes können an den Verbindungselementen 13 bzw. an den Axial-Sicherungselementen 13a auch Vorsprünge vorgesehen sein, die in die Ringnut 16 der Wischwelle 3 eingreifen.

Weiterhin besteht bei der Ausführung der Figuren 1 - 3 und 7 auch die Möglichkeit, die bei Übersteigen der Auslösekraft aufgehobene axiale Sicherung auf andere Weise zu realisieren, beispielsweise durch ein zusätzliches Axial-Sicherungselement, welches im Normalzustand eine axiale Abstützung nicht nur für die Wischwelle 3, sondern auch für den Kurbelarm 10 oder das Getrieberad 22 bewirkt und so ausgeführt ist, dass bei einer eine Auslösekraft übersteigenden Krafteinwirkung diese axiale Abstützung aufgehoben wird, beispielsweise in Form eines in die Ringnut 16 eingesetzten Federring oder in Form eines in die Ringnut 16 eingesetzten abscherbaren Ring z.B. aus Kunststoff.

Vorstehend wurde weiterhin davon ausgegangen, dass das Verbindungselement 13 ein mit dem Kurbelarm 10 oder dem Getrieberad 22 verbundenes bzw. an diesen angespritztes Element ist. Grundsätzlich besteht auch die Möglichkeit, den Kurbelarm oder das Getreiberad 22 einstückig mit einem die Wischwelle 3 umgreifenden Verbindungsabschnitt herzustellen, welcher dann von seiner Funktion her dem Verbindungselement 13 entspricht.

### Bezugszeichenliste

- 1: Platine
- 1.1: Träger
- 2, 2a, 2b: Wischwellenlager
- 3: Wischwelle
- 3.1, 3.4: Wischwellenende
- 3.2, 3.3: Teillänge der Wischwelle
- 3.2.1: Wischwellenabschnitt
- 4: Fahrzeugkontur
- 5: Wischwellenlagergehäuse
- 5.1, 5.2: Gehäuseabschnitt
- 6: Lagerbuchse
- 7: Befestigungsöse
- 8, 8a: elektromotorischer Antrieb
- 9, 10: Kurbelarm
- 11: Auflaufscheibe
- 12: Rändelung
- 13: Verbindungselement
- 13a: Axial-Sicherungselement
- 14: Hülsenöffnung
- 15: Wulst
- 16: Ringnut
- 16.1: Seitenfläche der Ringnut 16
- 17: Öffnung
- 18: Ringnut
- 19: *?*
- 20: Getriebegehäuse
- 20.1, 20.2: Gehäuseteil
- 21: zusätzliches Lager für die Wischwelle 3
- 22: Getrieberad, beispielsweise Schneckenrad
- A: axiales Ausweichen der Wischwelle 3
- F: äußere Krafteinwirkung

## Patentansprüche

1. Wischanlage für Fahrzeugscheiben, insbesondere für Fahrzeugfrontscheiben, mit zumindest einer in wenigstens einem Wischwellenlager (2, 2a, 2b) gelagerten Wischwelle (3), die von einem Wischerantrieb (8, 8a) oder einem Motor dieses Antriebs über wenigstens ein an der Wischwelle (3) angreifendes Antriebselement (10, 22) antreibbar ist, und an der im Bereich eines ersten Endes (3.1), welches an einer sich von dem Wischwellenlager (2, 2a, 2b) wegerstreckenden Teillänge (3.2) gebildet ist, ein Wischarm befestigbar ist, sowie mit einem Axial-Sicherungselement zur Sicherung der Wischwelle (3) gegen axiales Verschieben, wobei diese Wirkung des Axial-Sicherungselementes bei einer eine Auslösekraft übersteigenden äußeren Krafteinwirkung (F) auf die Wischwelle (3) aufgehoben wird, **dadurch gekennzeichnet, dass**
das Antriebselement (10, 22) an der genannten Teillänge der Wischwelle (3.2) angreift dass die Wischwelle (3) bei der axialen Ausweichbewegung (A) relativ zum Antriebselement (10, 22) bewegbar ist, und dass ein als Axial-Sicherungselement dienendes Element (13) verdrehungssicher an der Wischwelle (3) ist.

2. Wischanlage nach Anspruch 1, **dadurch gekennzeichnet, dass** des als Axial-Sicherungselement dienende Element (13) verdrehungssicher an einem sich in Richtung zum ersten Wischwellenende (3.1) hin verjüngenden Abschnitt (3.2.1) der Wischwelle (3) vorgesehen ist.

3. Wischanlage nach einem der vorhergehenden Ansprüche, **dadurch gekennzeichnet, dass** das Antriebselement (10, 22) im Bereich seines die Wischwelle (3) an der Wischwellenteillänge (2.1) übergreifenden Abschnitts aus Kunststoff gefertigt ist.

4. Wischanlage nach einem der vorhergehenden Ansprüche, **dadurch gekennzeichnet, dass** das Antriebselement (10, 22) die Wischwelle (3) mit einem am Antriebselement (10, 22) vorgesehenen Verbindungselement (13) übergreift.

5. Wischanlage nach Anspruch 4, **dadurch gekennzeichnet, dass** das Verbindungselement (13) an das Antriebselement (10, 22) angespritzt ist.

6. Wischanlage nach Anspruch 4, **dadurch gekennzeichnet, dass** das Verbindungselement (13) einstückig mit dem Antriebselement (10, 22) hergestellt ist.

7. Wischanlage nach Anspruch 4 oder 5, **dadurch gekennzeichnet, dass** das Verbindungselement (13) als Axial-Sicherungselement ausgeführt ist.

8. Wischanlage nach einem der vorhergehenden Ansprüche, **dadurch gekennzeichnet, dass** das Verbindungselement bzw. das Axial-Sicherungselement (13, 13a) ein Formteil aus Kunststoff ist.

9. Wischanlage nach einem der vorhergehenden Ansprüche, **dadurch gekennzeichnet, dass** das Verbindungselement (13) bzw. das Axial-Sicherungselement (13a) zur axialen Sicherung der Wischwelle (3) mit einer an der Wischwelle (3) gebildeten axialen Abstützfläche (16.1) zusammenwirkt, wobei die axiale Abstützfläche (16.1) von einer Seitenfläche einer Ausnehmung bzw. einer Nut (16) in der Wischwelle (3) gebildet ist.

10. Wischanlage nach Anspruch 7, **dadurch gekennzeichnet, dass** das Verbindungselement (13) bzw. das Axial-Sicherungselement (13a) wenigstens einen Vorsprung oder Wulst (15) aufweist, der mit der wischwellenseitigen axialen Abstützfläche (16.1) zusammenwirkt.

11. Wischanlage nach einem der vorhergehenden Ansprüche, **dadurch gekennzeichnet, dass** die Wischwelle (3) einen Wischwellenabschnitt (3.2.1) aufweist, der einen von der Kreisform abweichenden Querschnitt besitzt und/oder mit einer Profilierung, beispielsweise mit einer Rändelung (12) versehen ist und der von dem Axial-Sicherungselement (13a) formschlüssig umgriffen wird.

12. Wischanlage nach einem der vorhergehenden Ansprüche, **dadurch gekennzeichnet, dass** der Wischwellenabschnitt (3.2.1) unmittelbar an das Wischwellenlager (2, 2a, 2b) bzw. unmittelbar an ein dieses Wischwellenlager (2, 2a, 2b) bildendes Wischwellenlagergehäuse (5) anschließend vorgesehen ist.

13. Wischanlage nach einem der vorhergehenden Ansprüche, dass das Antriebselement ein Kurbelarm (10) oder ein Getrieberad (22) des Wischerantriebs (8a) ist.

14. Wischanlage nach einem der vorhergehenden Ansprüche, **dadurch gekennzeichnet, dass** die Wischwelle (3) Teil des Wischerantriebs (8a), beispielsweise die Ausgangswelle des Wischerantriebs (8a), ist.

15. Wischanlage nach Anspruch 13, **dadurch gekennzeichnet, dass** das wenigstens eine Wischwellenlager (2b) in einem Gehäuseteil (20.1) des Wischerantriebs (8) gebildet, ist.

## Claims

1. Windscreen wiper module for vehicle screens, particularly for vehicle front windscreens, with, mounted in at least one wiper shaft bearing (2, 2a, 2b), at least one wiper shaft (3), which is drivable by a wiper drive (8, 8a) or a motor of this drive by means of at least one drive element (10, 22) engaging on the wiper shaft (3) and on which, in the area of one end (3.1) formed on a sublength (3.2) extending away from the wiper shaft bearing (2, 2a, 2b), a wiper arm is attachable and with an axial securing element for securing the wiper shaft (3) against axial displacement, wherein this effect of the axial securing element is cancelled in case of an external effect of force (F) exceeding the triggering force on the wiper shaft (3), **characterised in that** the drive element (10, 22) engages on said sublength of the wiper shaft (3.2), that the wiper shaft (3) is moveable in relation to the drive element (10, 22) during the axial evasion movement (A) and that an element (13) service as an axial securing element is mounted in a torsion-proof manner on the wiper shaft (3).

2. Windscreen wiper module according to claim 1, **characterised in that** the element (13) serving as an axial securing element is provided in a torsion-proof manner on a section (3.2.1) of the wiper shaft (3) tapering in the direction of the first wiper shaft end (3.1).

3. Windscreen wiper module according to one of the above claims, **characterised in that** the drive element (10, 22) is manufactured from plastic in the area of its section overlapping the wiper shaft (3) on the wiper shaft length (2.1).

4. Windscreen wiper module according to one of the above claims, **characterised in that** the drive element (10, 22) overlaps the wiper shaft (3) with a connecting element (13) provided on the drive element (10, 22).

5. Windscreen wiper module according to claim 4, **characterised in that** the connecting element (13) is injected on to the drive element (10, 22).

6. Windscreen wiper module according to claim 4, **characterised in that** the connecting element (13) is manufactured in one piece with the drive element (10, 22).

7. Windscreen wiper module according to claim 4 or 5, **characterised in that** the connecting element (13) is executed as an axial securing element.

8. Windscreen wiper module according to one of the above claims, **characterised in that** the connecting element and axial securing element (13, 13a) is a moulding made of plastic.

9. Windscreen wiper module according to one of the above claims, **characterised in that** the connecting element (13) and the axial securing element (13a) interact with an axial support surface (16.1) formed on the wiper shaft (3) for axial securing of the wiper shaft (3), with the axial support surface (16.1) being formed by a lateral surface of a recess or a groove (16) in the wiper shaft (3).

10. Windscreen wiper module according to claim 7, **characterised in that** the connecting element (13) and the axial securing element (13a) present at least one projection or bead (15), which interacts with the axial support surface (16.1) on the wiper shaft side.

11. Windscreen wiper module according to one of the above claims, **characterised in that** the wiper shaft (3) presents a wiper shaft section (3.2.1) which possesses a cross-section differing from a circular shape and/or is provided with profiling, for example with knurling (12) and which is encompassed positively by the axial securing element (13a).

12. Windscreen wiper module according to one of the above claims, **characterised in that** the wiper shaft section (3.2.1) is provided directly adjacent to the wiper shaft bearing (2, 2a, 2b) and directly adjacent to a wiper shaft bearing housing (5) forming this wiper shaft bearing (2, 2a, 2b).

13. Windscreen wiper module according to one of the above claims, such that the drive element is a crank arm (10) or a gearwheel (22) of the wiper drive (8a).

14. Windscreen wiper module according to one of the above claims, **characterised in that** the wiper shaft (3) is a part of the wiper drive (8a), for example the output shaft of the wiper drive (8a).

15. Windscreen wiper module according to claim 13, **characterised in that** the at least one wiper shaft bearing (2b) is formed in a housing section (20.1) of the wiper drive (8).

## Revendications

1. Système d'essuie-glace pour les vitres d'un véhicule, en particulier pour les pare-brise d'un véhicule, comportant au moins un arbre (3), qui est monté dans au moins un palier (2, 2a, 2b) et qui peut être actionné par un système d'entraînement (8, 8a) ou un moteur de ce système d'entraînement par l'intermédiaire d'au moins un élément d'entraînement (10, 22) en prise sur l'arbre (3), et sur lequel, dans la zone d'une première extrémité (3.1) formée sur une longueur partielle (3.2) s'éloignant du palier (2, 2a, 2b), peut être fixé un bras d'essuyage, et comportant un élément d'immobilisation axiale pour immobiliser l'arbre (3) contre tout mouvement axial, cette action de l'élément d'immobilisation axiale étant annulée en cas d'application d'une force (F) extérieure supérieure à la force de déclenchement, **caractérisé en ce que** l'élément d'entraînement (10, 22) est en prise sur l'arbre au niveau de la longueur partielle (3.2) mentionnée de l'arbre, **en ce que** l'arbre (3) est apte à être déplacé par rapport à l'élément d'entraînement (10, 22) lors du mouvement de dégagement (A) axial, et **en ce qu'**un élément (13) faisant fonction d'élément d'immobilisation axiale est immobilisé en rotation sur l'arbre (3).

2. Système d'essuie-glace selon la revendication 1, **caractérisé en ce que** l'élément (13) faisant fonction d'élément d'immobilisation axiale est prévu de manière immobile en rotation sur un tronçon (3.2.1) de l'arbre (3), lequel se rétrécit vers la première extrémité (3.1) de l'arbre.

3. Système d'essuie-glace selon l'une quelconque des revendications précédentes, **caractérisé en ce que** l'élément d'entraînement (10, 22) est réalisé en matière plastique dans la zone de sa partie qui s'engage au-dessus de l'arbre (3) au niveau de la longueur partielle (2.1) de l'arbre.

4. Système d'essuie-glace selon l'une quelconque des revendications précédentes, **caractérisé en ce que** l'élément d'entraînement (10, 22) s'engage au-dessus de l'arbre (3) avec un élément de liaison (13) prévu sur l'élément d'entraînement (10, 22).

5. Système d'essuie-glace selon la revendication 4, **caractérisé en ce que** l'élément de liaison (13) est moulé par injection sur l'élément d'entraînement (10, 22).

6. Système d'essuie-glace selon la revendication 4, **caractérisé en ce que** l'élément de liaison (13) est réalisé d'un seul tenant avec l'élément d'entraînement (10, 22).

7. Système d'essuie-glace selon la revendication 4 ou 5, **caractérisé en ce que** l'élément de liaison (13) est réalisé sous la forme d'un élément d'immobilisation axiale.

8. Système d'essuie-glace selon l'une quelconque des revendications précédentes, **caractérisé en ce que** l'élément de liaison, plus précisément l'élément d'immobilisation axiale (13, 13a) est réalisé sous la forme d'un élément moulé en matière plastique.

9. Système d'essuie-glace selon l'une quelconque des revendications précédentes, **caractérisé en ce que** l'élément de liaison, plus précisément l'élément d'immobilisation axiale (13a), en vue de l'immobilisation axiale de l'arbre (3), coopère avec une surface d'appui (16.1) axiale, formée sur l'arbre (3), ladite surface d'appui (16.1) axiale étant formée par une face latérale d'un évidement ou d'une rainure (16) dans l'arbre (3).

10. Système d'essuie-glace selon la revendication 7, **caractérisé en ce que** l'élément de liaison, plus précisément l'élément d'immobilisation axiale (13a), comporte au moins une saillie ou bourrelet (15), qui coopère avec la surface d'appui (16.1) axiale du côté de l'arbre.

11. Système d'essuie-glace selon l'une quelconque des revendications précédentes, **caractérisé en ce que** l'arbre (3) comporte un tronçon (3.2.1) qui a une section différente de la forme circulaire et/ou est muni d'un profilage, tel qu'un moletage (12), et qui est enserré par conjugaison de forme par l'élément d'immobilisation axiale (13a).

12. Système d'essuie-glace selon l'une quelconque des revendications précédentes, **caractérisé en ce que** le tronçon (3.2.1) de l'arbre est prévu directement sur le palier (2, 2a, 2b) de l'arbre ou directement adjacent à un boîtier (5) formant le palier (2, 2a, 2b).

13. Système d'essuie-glace selon l'une quelconque des revendications précédentes, **caractérisé en ce que** l'élément d'entraînement est un bras de manivelle (10) ou une roue d'engrenage (22) du système d'entraînement (8a) de l'essuie-glace.

14. Système d'essuie-glace selon l'une quelconque des revendications précédentes, **caractérisé en ce que** l'arbre (3) est une partie du système d'entraînement (8a) de l'essuie-glace, tel que l'arbre de sortie du système d'entraînement (8a).

15. Système d'essuie-glace selon la revendication 13, **caractérisé en ce que** ledit au moins un palier (2, 2a, 2b) est formé dans un partie de boîtier (20.1) du système d'entraînement (8) de l'essuie-glace.
